# NEUE EUROPÄISCHE PATENTSCHRIFT

(11) **EP 2 298 616 B2**
(45) Veröffentlichungstag und Bekanntmachung des Hinweises auf die Entscheidung über den Einspruch: **31.08.2022**
(45) Hinweis auf die Patenterteilung: 06.03.2019
(21) Anmeldenummer: 10172132.2
(22) Anmeldetag: 06.08.2010
(51) Int. Cl.: B60T 13/38, B60T 13/68, B60T 15/04, B60T 17/22

(54) **Steuergerät und Verfahren zum Testen einer Ventileinrichtung einer elektrischen Feststellbremse**
Control device and method for testing a valve device of an electric parking brake
Appareil de commande et procédé de test d'un dispositif de soupape d'un frein de stationnement électrique

(30) Priorität: 14.08.2009 DE 102009037636
(43) Veröffentlichungstag der Anmeldung: 23.03.2011
(73) Patentinhaber: KNORR-BREMSE Systeme für Nutzfahrzeuge GmbH, 80809 München (DE)
(72) Erfinder: Hilberer, Eduard, 68766, Hockenheim (DE); Herges, Michael, 80935, München (DE)
(74) Vertreter: Schumacher & Willsau

(56) Entgegenhaltungen:
- EP-A2- 0 937 618
- WO-A1-2005/025958
- DE-A1-102004 037 303
- DE-A1-102005 024 120
- DE-A1-102007 016 335

## Beschreibung

Die Erfindung betrifft ein Steuergerät für eine elektrische Feststellbremse eines Fahrzeugs, wobei die elektrische Feststellbremse eine erste als Stellglied wirkende Ventileinrichtung zum Be- und Entlüften einer Steuerleitung, eine zweite Ventileinrichtung zum Sperren oder Freigeben der Steuerleitung, ein Relaisventil, das von der Steuerleitung ansteuerbar ist und zumindest einen Federspeicherbremszylinder der elektrischen Feststellbremse be- oder entlüftet, und zumindest einen mit dem Steuergerät gekoppelten Drucksensor umfasst.

Die Erfindung betrifft weiterhin ein Verfahren zum Testen der Funktionsfähigkeit einer ersten als Stellglied wirkenden Ventileinrichtung zum Be- und Entlüften einer Steuerleitung einer elektrischen Feststellbremse mit einem Steuergerät, einer zweiten Ventileinrichtung zum Sperren oder Freigeben der Steuerleitung, einem Relaisventil, das von der Steuerleitung ansteuerbar ist und zumindest einen Federspeicherbremszylinder der elektrischen Feststellbremse be- und entlüftet, und zumindest einem mit dem Steuergerät gekoppelten Drucksensor.

In modernen Bremssystemen werden elektrisch ansteuerbare Feststellbremsvorrichtungen eingesetzt, die zur Betätigung einer Feststell- beziehungsweise Parkbremse eines Fahrzeugs dienen. So werden insbesondere zur Steuerung von Drücken in Federspeicherbremszylindern der Feststellbremse so genannte ECPB-Module (ECPB = Electronic Contolled Parking Brake) verwendet. Diese ECPB-Module umfassen üblicherweise ein Steuergerät, über das eine aus mehreren Ventileinrichtungen bestehende Feststellbremsbetätigungseinrichtung und eine Notlöseeinrichtung für die Feststellbremse ansteuerbar sind. Um die elektrische Feststellbremse zu öffnen oder zu schließen, steuert das zugehörige Steuergerät die Feststellbremseinrichtung an, die entsprechend der Ansteuerung beispielsweise eine Entlüftung der Federspeicherbremszylinder zum Schließen der elektrischen Feststellbremse und umgekehrt eine Belüftung der Federspeicherbremszylinder zum Lösen der Feststellbremse vornimmt. Hierzu steuert das Steuergerät üblicherweise eine oder mehrere Ventileinrichtungen der Feststellbremseinrichtung in geeigneter Weise an, wobei ein oder mehrere Magnetventile geschaltet werden. Insbesondere bei einer pulsmodulierten Ansteuerung des als Stellglied der elektrischen Feststellbremse wirkenden Magnetventils ist dieses Magnetventil einem erhöhten Verschleiß durch die zahlreichen Schaltvorgänge ausgesetzt. Der Defekt des Stellgliedes hat Auswirkungen auf das gesamte Fahrzeug, da die elektrische Feststellbremse nicht mehr schaltbar ist und in dem momentan vorliegenden Zustand verbleibt. Befindet sich die Feststellbremse in geöffnetem Zustand, so ist ein sicheres Abstellen des Fahrzeugs erschwert, während ein Anfahren des Fahrzeugs bei geschlossener Feststellbremse auf Dauer Beschädigungen an dem Fahrzeug hervorrufen kann.

EP 0 937 618 A2 offenbart ein Verfahren zum Testen der Funktionsfähigkeit einer Ventileinrichtung einer elektrischen Feststellbremse mit einem Steuergerät, wobei die elektrische Feststellbremse ein Hydraulikaggregat vorsieht, welches eine Ventilanordnung zur Steuerung der Radbremsen und Drucksensoren die den Radbremsen zugeordnet sind enthält.

Der Erfindung liegt die Aufgabe zugrunde, eine Testfunktion für das Stellglied der elektrischen Feststellbremse bereitzustellen, um die genannten Probleme bei Defekt des Stellgliedes sicher erkennen zu können und Gefahrensituationen und unnötige Schäden zu vermeiden.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Steuergerät dadurch auf, dass das Steuergerät geeignet ist, eine Fehlermeldung auszugeben, wenn nach der Betätigung der ersten Ventileinrichtung der von dem Drucksensor gemessene Druck sich maximal um einen vorgegebenen Differenzbetrag ändert. Durch die Ausgabe der Fehlermeldung kann der Fahrer darauf hingewiesen werden, dass die als Stellglied wirkende erste Ventileinrichtung der elektrischen Feststellbremse nicht ordnungsgemäß arbeitet. Dies kann daraus geschlossen werden, dass der von dem Drucksensor gemessene Druck sich nach der Ansteuerung der ersten Ventileinrichtung um maximal einen vorgegebenen Differenzbetrag ändert. Der vorgegebene Differenzbetrag kann beispielsweise 10% der erwarteten Druckänderung oder 0,1 bar Druckdifferenz sein. Der genaue Wert des Differenzdrucks, bis zu dem eine Fehlermeldung ausgegeben wird, ist beispielsweise von dem aktuell vorhandenen Versorgungsdruck der elektrischen Feststellbremse und dem nachzuliefernden Luftvolumen nach Schaltvorgängen des Stellgliedes abhängig. Letztere können an dem Drucksensor kurzfristige Druckschwankungen verursachen, obwohl die als Stellglied wirkende Ventileinrichtung fehlerfrei arbeitet.

Nützlicherweise kann dabei vorgesehen sein, dass das Steuergerät geeignet ist, eine Fehlermeldung auszugeben, wenn nach der Betätigung der ersten Ventileinrichtung die ermittelte Druckdifferenz gleich Null ist. Das Blockieren der als Stellglied wirkenden Ventileinrichtung in einem vollständig geschlossenen beziehungsweise vollständig geöffneten Schaltzustand kann insbesondere durch das völlige Ausbleiben einer an dem Druckssensor zu messenden Druckänderung detektiert werden.

Insbesondere kann vorgesehen sein, dass das Steuergerät geeignet ist, eine Fehlermeldung auszugeben, wenn sich der von dem Drucksensor gemessene Druck um mehr als einen vorgegebenen Differenzbetrag ändert, ohne dass die elektrische Feststellbremse betätigt wird. Die Veränderung des von dem Drucksensor gemessenen Drucks um mehr als einen vorgegebenen Differenzbetrag lässt auf eine Fehlfunktion der elektrischen Feststellbremse schließen. Denkbar ist beispielsweise, dass im Inneren der ersten Ventileinrichtung während eines bestromten Schaltzustandes eine elektrische Leitung defekt geht, woraufhin die erste Ventileinrichtung in einer der möglichen Schaltzustände verharrt. Dieser Defekt kann sich insbesondere dann bemerkbar machen, wenn während einer pulsmodulierten Ansteuerung der ersten Ventileinrichtung das Druckniveau durch die erste Ventileinrichtung konstant gehalten werden soll, wobei gleichzeitig die erste Ventileinrichtung während definierter Zeiträume angesteuert wird.

Erfindungsgemäß kann vorgesehen sein, dass der zumindest eine Drucksensor zwischen der zweiten Ventileinrichtung und dem Relaisventil angeordnet ist. Die Anordnung des Drucksensors ermöglicht die Reduzierung der detektierbaren Fehler. Ein Defekt des Relaisventils kann bei dieser Anordnung des Drucksensors beispielsweise die Druckerfassung nicht beeinträchtigen.

Alternativ kann vorgesehen sein, dass der zumindest eine Drucksensor zwischen der ersten Ventileinrichtung und der zweiten Ventileinrichtung angeordnet ist. Bei dieser Anordnung des Drucksensors wirkt sich auch ein Defekt der zweiten Ventileinrichtung nicht auf die Druckerfassung aus.

Die Erfindung baut auf dem gattungsgemäßen Verfahren dadurch auf, dass das Steuergerät eine Fehlermeldung ausgibt, wenn nach der Betätigung der ersten Ventileinrichtung der von dem Drucksensor gemessene Druck sich maximal um einen vorgegebenen Differenzbetrag ändert.

Auf diese Weise werden die Vorteile und Besonderheiten des erfindungsgemäßen Steuergeräts auch im Rahmen eines Verfahrens umgesetzt. Dies gilt auch für die nachfolgend angegebenen besonders bevorzugten Ausführungsformen des erfindungsgemäßen Verfahrens.

Insbesondere kann vorgesehen sein, dass das Steuergerät eine Fehlermeldung ausgibt, wenn nach der Betätigung der ersten Ventileinrichtung die ermittelte Druckdifferenz gleich Null ist.

Dieses ist in nützlicher Weise dadurch weitergebildet, dass das Steuergerät eine Fehlermeldung ausgibt, wenn sich der von dem Drucksensor gemessene Druck um mehr als einen vorgegebenen Differenzbetrag ändert, ohne dass die elektrische Feststellbremse betätigt wird.

Erfindungsgemäß kann auch vorgesehen sein, dass der zumindest eine Drucksensor den Druck zwischen der zweiten Ventileinrichtung und dem Relaisventil erfasst.

Alternativ kann vorgesehen sein, dass der zumindest eine Drucksensor den Druck zwischen der ersten Ventileinrichtung und der zweiten Ventileinrichtung erfasst.

Nützlicherweise kann vorgesehen sein, dass das Steuergerät nach der Einleitung des Druckaufbaus vor Erreichen des normalen Betriebdrucks in einer Versorgungsleitung der elektrischen Feststellbremse die erste Ventileinrichtung während eines Zeitintervalls t₁ ansteuert, um deren Funktion zu überprüfen. Nach der Einleitung des Druckaufbaus in der Versorgungsleitung der elektrischen Feststellbremse, das heißt üblicherweise direkt nach der Inbetriebnahme des Fahrzeugs, wird zunächst nicht genügend Versorgungsdruck über die Versorgungsleitungen zum Lösen der Feststellbremse bereitgestellt. Das kurzfristige Betätigen der als Stellglied wirkenden ersten Ventileinrichtung ist daher gefahrlos möglich. Auf diese Weise kann die Funktionsfähigkeit der ersten Ventileinrichtung ohne nachteilige Auswirkungen überprüft werden. Das Zeitintervall t₁ ist dabei so bemessen, dass eine ausreichende Druckänderung detektierbar ist, insbesondere da erst Druck in der Versorgungsleitung aufgebaut wird.

Vorteilhafterweise kann vorgesehen sein, dass das Steuergerät bei Vorliegen des normalen Betriebsdrucks in einer Versorgungsleitung der elektrischen Feststellbremse die erste Ventileinrichtung während einer Zeitspanne t₂ ansteuert, um deren Funktion zu überprüfen. Bei Vorliegen des normalen Betriebsdrucks in der Versorgungsleitung der elektrischen Feststellbremse ist der bereitgestellte Versorgungsdruck ausreichend, um die Feststellbremse zu lösen. Um das Überprüfen der ersten Ventileinrichtung ohne ein unbeabsichtigtes Wegrollen des Fahrzeugs zu ermöglichen, muss die Zeitspanne t₂ so bemessen sein, dass nach ihrem Verstreichen eine als Funktionsnachweis genügende Druckdifferenz aufgebaut und detektierbar ist. Gleichzeitig muss die Zeitspanne t₂ so kurz sein, dass ein Anrollen des Fahrzeugs unterbleibt.

Weiterhin kann vorgesehen sein, dass die Raddrehzahl zur Bestimmung einer Bewegungszustands des Fahrzeugs gemessen wird und dass der Bewegungszustand im Rahmen eines Plausibilitätstests für die Funktionsfähigkeit des Drucksensors herangezogen wird. Während des normalen Betriebs des Fahrzeugs korreliert die Fahrzeugbeschleunigung mit dem von dem Drucksensor gemessenen Druck während der Betätigung der Feststellbremse. Auf diese Weise ist ein Plausibilitätstest durchführbar, da ein starkes Abweichen der gemessenen Druckwerte von der Fahrzeugbeschleunigung ein Indiz für einen Sensordefekt ist.

Die Erfindung wird nun mit Bezug auf die begleitenden Zeichnungen anhand besonders bevorzugter Ausführungsformen beispielhaft erläutert.

Es zeigen:
- Figur 1: eine vereinfachte Darstellung einer Feststellbremsvorrichtung in einem nur teilweise dargestellten Bremssystem;
- Figur 2: eine erste detaillierte Ausführungsform einer nicht beanspruchten Feststellbremsvorrichtung;
- Figur 3: eine erste detaillierte Ausführungsform einer erfindungsgemäßen Feststellbremsvorrichtung und
- Figur 4: eine zweite detaillierte Ausführungsform einer erfindungsgemäßen Feststellbremsvorrichtung.

In den nachfolgenden Zeichnungen bezeichnen gleiche Bezugszeichen gleiche oder gleichartige Teile.

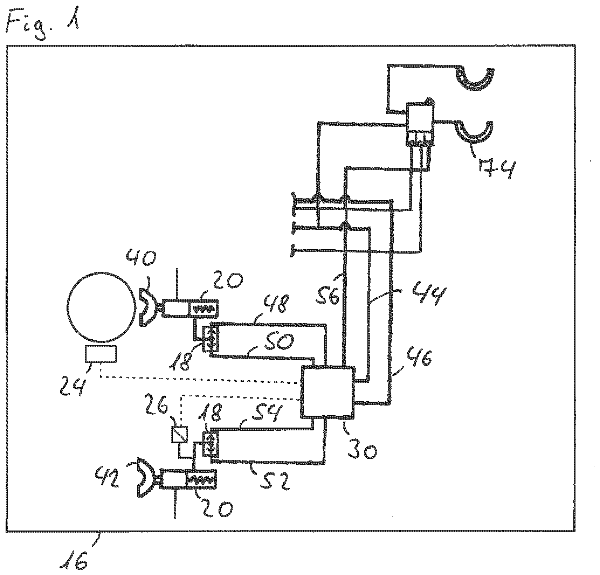

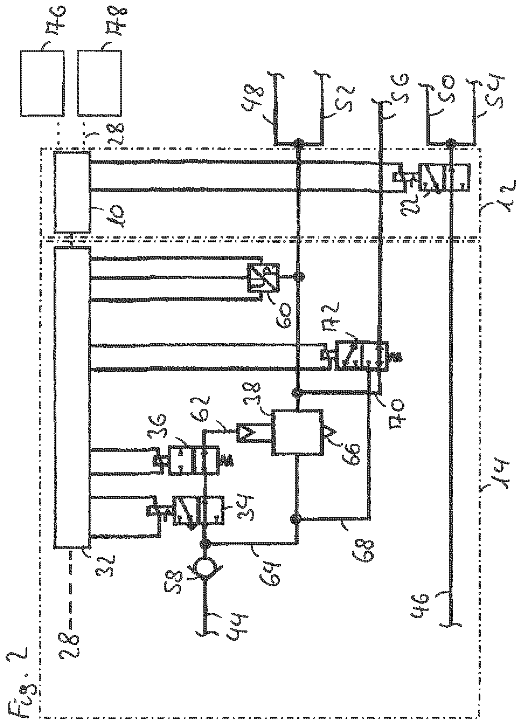

Figur 1 zeigt eine vereinfachte Darstellung der Feststellbremsvorrichtung 30 in einem nur teilweise dargestellten Bremssystem eines Fahrzeugs 16. Weiterhin ist eine nicht beanspruchte Ausführungsform der Feststellbremsvorrichtung 30 in Figur 2 detailliert als elektrische Feststellbremse 14 und Notlöseeinrichtung 12 gezeigt. Die Feststellbremsvorrichtung 30 umfasst unter anderem ein Steuergerät 32 zur Ansteuerung mehrerer Ventileinrichtungen 34, 36 und 38, die zum Lösen und Feststellen einer linken und rechten Feststellbremse 40, 42 des Fahrzeugs 16 dienen. Darüber hinaus umfasst die Feststellbremsvorrichtung 30 eine Steuereinrichtung 10 zur Ansteuerung eines Notlöseventils 22, die bei Ausfall des Steuergeräts 32 und/oder der Ventileinrichtungen 34, 36 und 38 zum Lösen der linken und rechten Feststellbremse 40, 42 dient. Die Steuereinrichtung 10 und das Steuergerät 32 sind voneinander unabhängig, insbesondere was die Funktionstüchtigkeit der Steuereinrichtung 10 beim Ausfall des Steuergeräts 32 betrifft, und umfassen jeweils dem Fachmann bekannte Komponenten, beispielsweise eine ECU oder einen Controller mit einem Prozessor, einen Speicher etc. Darüber hinaus ist die Steuereinrichtung 10 mit dem Steuergerät 32 gekoppelt, um Rückschlüsse über den Zustand des Steuergeräts 32 ziehen zu können und damit einen möglichen Ausfall des Steuergeräts 32 ermitteln zu können. Es ist auch möglich, die Steuereinrichtung 10 in ein anderes Steuergerät des Fahrzeugs 16 zu integrieren, zum Beispiel in ein ABS/EBS-Steuergerät 76 oder in eine Getriebe-/Kupplungssteuergerät 78. Die Raddrehzahl beziehungsweise die Druckverhältnisse an den Federspeicherzylindern 20 können von Raddrehzahlsensoren 24 beziehungsweise Drucksensoren 26 erfasst werden.

Die Ventileinrichtung 34 ist als bistabiles 3/2-Wegeventil ausgeführt. Die Ventileinrichtung 36 ist als 2/2-Wegeventil ausgeführt und die Ventileinrichtung 38 ist als Relaisventil 38 mit einer Entlüftung 66 ausgeführt. Das bistabile 3/2-Wegeventil 34 ist mit einem ersten Anschluss über ein Rückschlagventil 58 mit einer Druckmittelzuführleitung 44 des Bremssystems gekoppelt. Die Druckmittelzuführleitung 44 kann beispielsweise mit einer nicht dargestellten Druckluftaufbereitungsanlage (EAC-Modul) zur Druckluftbeschaffung gekoppelt sein. Im dargestellten Fall öffnet das Rückschlagventil 58 bei einer Druckmittelströmung in Richtung des bistabilen 3/2-Wegeventils 34 und schließt bei entgegen gesetzter Strömungsrichtung des Druckmittels. Weiterhin ist das bistabile 3/2-Wegenventil 34 mit einem zweiten Anschluss an das 2/2-Wegeventil 36 gekoppelt. In der in Figur 2 dargestellten Schaltstellung des bistabilen 3/2-Wegeventils 34 sind der erste und der zweite Anschluss des bistabilen 3/2-Wegeventils 34 miteinander verbunden. In der nicht dargestellten Schaltstellung des bistabilen 2/3-Wegeventils 34 ist der erste Anschluss geschlossen, wobei der zweite Anschluss des bistabilen 3/2-Wegeventils 34 über den dritten Anschluss mit der Atmosphäre verbunden ist. Das 2/2-Wegeventil 36 verbindet in der dargestellten Schaltstellung dessen ersten Anschluss mit dem zweiten Anschluss. Dem gegenüber sind der erste und der zweite Anschluss des 2/2-Wegeventils 36 in der nicht dargestellten Schaltstellung voneinander getrennt. Der zweite Anschluss des 2/2-Wegeventils 36 ist mit einem Steuereingang 62 eines Relaisventils 38 gekoppelt. Das bistabile 3/2-Wegeventil 34 ist durch das Steuergerät 32 der elektrischen Feststellbremse 14 derart ansteuerbar, dass es bei Vorliegen einer bestimmten Polung der elektrischen Leitungen die dargestellte Schaltstellung einnimmt. Hingegen ist das bistabile 3/2-Wegeventil 34 weiterhin so ansteuerbar, dass es die nicht dargestellte Schaltstellung einnimmt, wenn eine Umpolung der elektrischen Leitungen durch das Steuergerät 32 der elektrischen Feststellbremse 14 vorgenommen wird. Das 2/2-Wegeventil 36 nimmt in einem unbestromten Zustand die dargestellte Schaltstellung und umgekehrt in einem bestromten Zustand die nicht dargestellte Schaltstellung ein. Zwischen dem Rückschlagventil 58 und dem bistabilen 3/2-Wegeventil 34 ist an einer Verzweigungstelle eine Bremsleitung 64 mit der ersten Druckmittelzuführleitung 44 gekoppelt. Die Bremsleitung 64 ist mit einem Anschluss des Relaisventils 38 gekoppelt und setzt sich über einen zweiten Anschluss des Relaisventils 38 hinaus fort. Weiterhin ist an dem Relaisventil 38 die Entlüftung 66 vorgesehen. In Abhängigkeit von dem an dem Steuereingang 62 anliegenden Druck stellt das Relaisventil 38 eine Verbindung zwischen seinen beiden Anschlüssen zur Bremsleitung 64 beziehungsweise zwischen dem stromabwärts des Relaisventils 38 liegenden Teil der Bremsleitung 64 und der Entlüftung 66 her. Stromabwärts des Relaisventils 38 verzweigt sich die Bremsleitung 64 schließlich an einer Verzweigungsstelle in Bremsleitungen 48 und 52. Die Bremsleitungen 48 und 52 sind jeweils über ein Wechselventil 18 mit einem linken und rechten Federspeicherbremszylinder 20 der linken und rechten Feststellbremse 40, 42 gekoppelt. Darüber hinaus ist ein Drucksensor 60 zwischen dem Relaisventil 38 und der Verzweigungsstelle zu den Bremsleitungen 48, 52 zur Druckerfassung vorgesehen. Alternativ kann der Drucksensor 60 auch in einer oder beiden Bremsleitungen 48, 52 zwischen dem entsprechenden Wechselventil 18 und dem Federspeicherbremszylinder 20 der jeweiligen Feststellbremse 40, 42 vorgesehen sein.

Das Notlöseventil 22, das durch ein bistabiles 3/2-Wegeventil 22 gebildet wird, ist in einer weiteren Druckmittelzuführleitung 46 vorgesehen und wird, wie vorstehend erwähnt, durch die Steuereinrichtung 10 über elektrische Leitungen angesteuert. Die weitere Druckmittelzuführleitung 46 kann dabei ebenso wie die Druckmittelzuführleitung 44 mit einer Druckluftaufbereitungsanlage gekoppelt sein. Insbesondere ist die weitere Druckmittelzuführleitung 46 mit einem ersten Anschluss des bistabilen 3/2-Wegeventils 22 gekoppelt, der in der dargestellten Schaltstellung mit dem zweiten Anschluss des bistabilen 3/2-Wegeventils 22 gekoppelt ist. In der nicht dargestellten Schaltstellung ist hingegen der erste Anschluss geschlossen, wohingegen der zweite Anschluss des bistabilen 3/2-Wegeventils 22 über den dritten Anschluss mit der Atmosphäre verbunden ist. Bei Vorliegen einer bestimmten Polung nimmt das bistabile 3/2-Wegeventil 22 die dargestellte Schaltstellung ein. Wird eine entgegengesetzte Polung auf das bistabile 3/2-Wegeventil 22 aufgebracht, so nimmt es die nicht dargestellte Schaltstellung ein. Der zweite Anschluss des bistabilen 3/2-Wegeventils 22 ist über eine Verzweigungsstelle mit Bremsleitungen 50 und 54 gekoppelt. Die Bremsleitungen 50 und 54 sind ebenso wie die Bremsleitungen 48 und 52 jeweils über die Wechselventile 18 mit den Federspeicherbremszylindern 20 der linken und rechten Feststellbremse 40, 42 gekoppelt.
Darüber hinaus ist stromaufwärts des Relaisventils 38 eine Anhängertestbremsleitung 68 an einer Verzweigungsstelle mit der Bremsleitung 64 gekoppelt, wobei die Anhängerbremstestleitung 68 mit einem dritten Anschluss eines 3/2-Wegeventils 72 gekoppelt ist. Weiterhin ist stromabwärts des Relaisventils 38 eine Anhängerbremstestleitung 70 an einer Verzweigungsstelle mit der Bremsleitung 64 gekoppelt, wobei die Anhängerbremstestleitung 70 mit einem ersten Anschluss des 3/2-Wegeventils 72 gekoppelt ist. In der dargestellten Schaltstellung des 3/2-Wegeventils 72 ist der erste Anschluss mit dem zweiten Anschluss verbunden, der über eine Anhängerbremstestleitung 56 mit einer in Figur 1 gezeigten Steuerventileinheit einer Anhängerbremse 74 gekoppelt ist. Hingegen ist der dritte Anschluss in der dargestellten Schaltstellung des 3/2-Wegeventils 72 geschlossen. In der nicht dargestellten Schaltstellung ist der erste Anschluss geschlossen, wohingegen der dritte und der zweite Anschluss des 3/2-Wegeventils 72 miteinander verbunden sind. Wie auch die vorstehend genannten Wegeventile 34 und 36 ist auch das 3/2-Wegeventil 72 mit dem Steuergerät 32 über elektrische Leitungen gekoppelt. Die Anhängerbremstestleitung 56 und das 3/2-Wegeventil 72 dienen insbesondere dazu, während eines Entlüftungsbetriebs der Feststellbremsen 40, 42 eine Bremswirkung der Anhängerbremse 74 mittels geeigneter Ansteuerung des 3/2-Wegeventils 72 durch das Steuergerät 32 aufzuheben. Dadurch kann überprüft werden, ob die Feststellbremsen 40, 42 auch ohne Bremswirkung der Anhängerbremse 74 ausreichend Bremswirkung für das Fahrzeug 16 mit einem daran gekoppelten Anhänger zur Verfügung stellen können.

Im Folgenden wird zunächst der normale Löse- und Feststellbetrieb der Feststellbremsen 40, 42 beschrieben. Anschließend wird auf die Testfunktion der ersten Ventileinrichtung 34 eingegangen.

Bei dem normalen Betrieb wird das 3/2-Wegeventil 22 durch die Steuereinrichtung 10 derart angesteuert, dass es seine nicht dargestellte Schaltstellung einnimmt. Dadurch wird eine Druckmittelzufuhr durch die weitere Druckmittelzuführleitung 46 unterbunden. Die Notbremsleitungen 50 und 54 sind daher über das 3/2-Wegeventil 22 mit der Atmosphäre verbunden. Dabei wird eine Entlüftung der Bremsleitungen 48 und 52 durch die Wechselventile 18 unterbunden.

Zum Lösen der Feststellbremsen 40, 42 ist es erforderlich, die Federspeicherbremszylinder 20 der jeweiligen Feststellbremse 40, 42 zu belüften, um deren Bremswirkung aufzuheben. Damit die von der Druckmittelzuführleitung 44 zur Verfügung gestellte Druckluft die Federspeicherbremszylinder 20 der Feststellbremsen 40, 42 erreichen kann, werden das bistabile 3/2-Wegeventil 34 und das 2/2-Wegeventil 36 in die dargestellte Schaltstellung gebracht. Das 2/2-Wegeventil 36 kann zur Einstellung der Druckmittelströmung in dem Steuereingang 62 des Relaisventils 38 phasenmoduliert angesteuert werden. Dadurch verbindet das Relaisventil 38 dessen Anschlüsse entsprechend der Einstellung der Druckmittelströmung in dem Steuereingang 62 mit ansteigenden Druckmittelströmungsdurchsatz miteinander. So wird ein stetiges beziehungsweise kontinuierliches oder gestuftes Abklingen der Bremswirkung der Feststellbremsen 40, 42 bewirkt. Das Druckmittel von der Bremsleitung 64 kann somit durch das Relaisventil 38 zu den Bremsleitungen 48 und 52 strömen. Über die Bremsleitungen 48 und 52 erreicht das Druckmittel die Wechselventile 18 und anschließend die Federspeicherbremszylinder 20 der entsprechenden linken und rechten Feststellbremse 40, 42, wodurch die Bremswirkung der Feststellbremsen 40, 42 auf stetige Weise aufgehoben wird.

Zum Schließen der Feststellbremsen 40, 42 steuert das Steuergerät 32 die Wegeventile 34 und 36 derart an, dass das bistabile 3/2-Wegeventil 34 die nicht dargestellte Schaltstellung einnimmt und das 2/2-Wegeventil 36 die dargestellte Schaltstellung einnimmt. Somit strömt die in dem Steuereingang 62 befindliche Druckluft zurück durch das 2/2-Wegeventil 36 und anschließend über das 3/2-Wegeventil 34 in die Atmosphäre. Dadurch trennt das Relaisventil 38 die Verbindung in der Bremsleitung 64, sorgt jedoch gleichzeitig durch Verbindung der Entlüftungseinrichtung 66 mit dem stromabwärtigen Teil der Bremsleitung 64 für die Entlüftung der Federspeicherbremszylinder 20 der Feststellbremsen 40, 42, wodurch eine Bremswirkung der Feststellbremsen 40, 42 hergestellt wird.

Die Testfunktion für die erste Ventileinrichtung kann insbesondere an einem stehenden Fahrzeug 16 ausgeführt werden. Die Federspeicherbremszylinder 20 der Feststellbremsen 40, 42 müssen mit einem Mindestdruck belüftet werden, um die Feststellbremse zu lösen. Bei Inbetriebnahme des Fahrzeugs 16 steht während einer Druckaufbauphase der hierzu benötigte Versorgungsdruck nicht bereit. Das Steuergerät 32 kann deshalb die erste Ventileinrichtung 34 und die zweite Ventileinrichtung 36 in die dargestellte Schaltposition bringen, ohne die Feststellbremsen 40, 42 zu lösen. Der sich langsam aufbauende Druck in der Versorgungsleitung 44 wird über den Steuereingang 62 das Relaisventil 38 ansteuern, weshalb das Druckniveau auch in der Bremsleitung 64 an der der Drucksensor 60 stromabwärts des Relaisventils 38 angeordnet ist ansteigen. Da der Mindestdruck zum Öffnen der Federspeicherbremszylinder 20 noch nicht vorliegt, öffnet die Feststellbremse hierbei nicht. Nach Verstreichen eines Zeitintervalls t₁ hat der von dem Drucksensor 60 gemessene Druck ein bestimmtes Niveau erreicht. Ist die gemessene Differenz der Drücke zum Anfang des Zeitintervalls t₁ und zum Ende des Zeitintervalls t₁ ausreichend groß, so arbeitet die erste Ventileinrichtung 34 fehlerfrei. Ist die zwischen beiden Drücken gemessene Differenz hingegen nicht ausreichend groß, so liegt wahrscheinlich ein Fehler in der elektrischen Feststellbremse 14, insbesondere in der ersten Ventileinrichtung 34 vor, weshalb das Steuergerät 32 ein entsprechendes Warnsignal, beispielsweise eine Warnlampe oder eine Displayausgabe im Fahrerhaus, als Fehlermeldung ausgibt.

Die Testfunktion der ersten Ventileinrichtung kann analog auch durchgeführt werden, wenn der in der Versorgungsleitung 44 anstehende Versorgungsdruck den Betriebsdruck erreicht hat. In diesem Fall kann die elektrische Feststellbremse geöffnet und geschlossen werden, weshalb die für einen Test zur Verfügung stehende Zeitspanne t₂ sehr kurz gewählt werden muss. Der Test der ersten Ventileinrichtung 34 sollte bei einer geöffneten Feststellbremse 40,42, das heißt einer stromabwärts des Relaisventils drucklosen Bremsleitung 64 beendet sein, bevor sich durch Ansteuern des Relaisventils 38 in der gesamten Bremsleitung 64 ein zum Schalten der Federspeicherzylinder 20 ausreichend hoher Druck eingestellt hat. Da die Federspeicherbremszylinder 20 erst bei einem Druck von ungefähr 6 bar schalten und der Versorgungsdruck üblicherweise zwischen 10 und 12 bar liegt, ist dies nicht problematisch.

Auch wenn das Fahrzeug 16 in Bewegung ist, kann die erste Ventileinrichtung 34 bei geöffneter Feststellbremse 40, 42 überprüft werden. Der an der Druckversorgungsleitung 44 anstehende Betriebsdruck beträgt ungefähr 10 bis 12 Bar dieser Druck steht auch in der Bremsleitung 64 an und wird bei belüfteter Feststellbremse von dem Drucksensor 60 detektiert. Das kurzzeitige Schalten der ersten Ventileinrichtung 34 in den nicht dargestellten Schaltzustand führt zu einer Entlüftung des Steuereingangs 62 infolgedessen der stromabwärts des Relaisventils 38 liegende Teil der Bremsleitung 64 ebenfalls entlüftet wird. Dieser Druckabfall kann von dem Drucksensor 60 detektiert werden und ausreichend groß sein, um auf die Funktionsfähigkeit der ersten Ventileinrichtung 34 schließen zu können. Schaltet das Steuergerät 32 nach Verstreichen der kurzen Zeitspanne t₂ die erste Ventileinrichtung 34 wieder in den dargestellten Zustand, so wird in Folge dessen die Bremsleitung 64 wieder über das Relaisventil 38 belüftet. Ist die Zeitspanne t₂ ausreichend kurz, so wurde der stromabwärts des Relaisventils 38 liegende Teil der Bremsleitung 64 lediglich teilentlüftet, wobei das dort anstehende Druckniveau nicht unter das zum Offenhalten der Federspeicherbremszylinder 20 notwendige Druckniveau abgefallen sein kann.

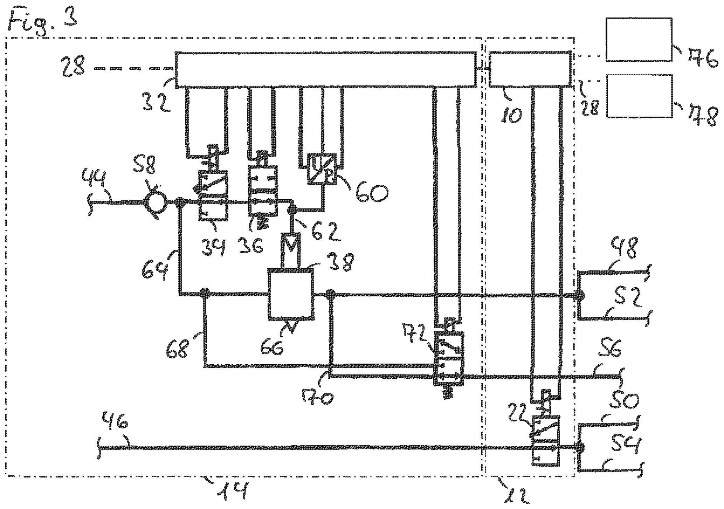

Figur 3 zeigt eine erste detaillierte Ausführungsform einer erfindungsgemäßen Feststellbremsvorrichtung. Im Unterschied zu der in Figur 2 dargestellten nicht beanspruchten Ausführungsform ist hier der Drucksensor 60 an dem Steuereingang 62 angeordnet. Der Test der ersten Ventileinrichtung 34 ist wie bei der nicht beanspruchten Ausführungsform durchführbar. Bei der ersten Ausführungsform ist jedoch eine Beeinflussung der Druckmessung durch einen eventuellen Defekt des Relaisventils 38 ausgeschlossen.

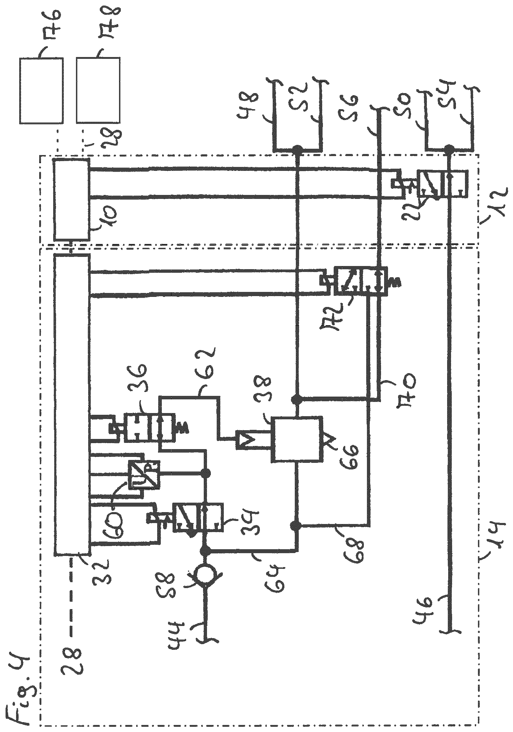

Figur 4 zeigt eine zweite detaillierte Ausführungsform einer erfindungsgemäßen Feststellbremsvorrichtung. Im Unterschied zur nicht beanspruchten Ausführungsform und der ersten Ausführungsform ist hier der Drucksensor 60 zwischen der ersten Ventileinrichtung 34 und der zweiten Ventileinrichtung 36 angeordnet. Auf diese Weise ist auch ein Defekt der zweiten Ventileinrichtung 36 nicht in der Lage die Druckmessung zu beeinflussen. Weiterhin kann durch das Schalten der zweiten Ventileinrichtung 36 in den nicht dargestellten Schaltzustand der Druck an dem Steuereingang 62 des Relaisventils 38 gehalten werden, weshalb auch der Druck stromabwärts des Relaisventils 38 in der Bremsleitung 64 dann konstant bleibt. Somit kann die erste Ventileinrichtung 34 geschaltet werden, ohne dass dies einen Einfluss auf das in dem Federspeicherbremszylinder 20 anstehende Druckniveau hat. Eine Beschränkung der Testzeit auf ein Zeitintervall t₁ beziehungsweise eine Zeitspanne t₂ kann somit umgangen werden.

### Bezugszeichenliste

- 10: Steuereinrichtung
- 12: Notlöseeinrichtung
- 14: elektrische Feststellbremse
- 16: Fahrzeug
- 18: Wechselventil
- 20: Federspeicherbremszylinder
- 22: Notlöseventil
- 24: Raddrehzahlsensor
- 26: Drucksensor
- 28: CAN-Bus
- 30: Feststellbremsvorrichtung
- 32: Steuergerät
- 34: erste Ventileinrichtung
- 36: zweite Ventileinrichtung
- 38: Relaisventil
- 40: linke Feststellbremse
- 42: rechte Feststellbremse
- 44: Druckmittelzuführleitung
- 46: weitere Druckmittelzuführleitung
- 48: Bremsleitung für linke Feststellbremse
- 50: Notbremsleitung für linke Feststellbremse
- 52: Bremsleitung für rechte Feststellbremse
- 54: Notbremsleitung für rechte Feststellbremse
- 56: Anhängerbremstestleitung
- 58: Rückschlagventil
- 60: Drucksensor
- 62: Steuereingang
- 64: Bremsleitung
- 66: Entlüftung
- 68: Anhängerbremstestleitung
- 70: Anhängerbremstestleitung
- 72: 3/2-Wegeventil
- 74: Anhängerbremse
- 76: EBS/ABS-Steuergerät
- 78: Geriebe-/KupplungsSteuergerät

## Patentansprüche

1. Elektrische Feststellbremse (14) eines Fahrzeugs (16) mit einem Steuergerät (32), wobei die elektrische Feststellbremse (14)
- eine erste als Stellglied wirkende Ventileinrichtung (34) zum Be- und Entlüften einer Steuerleitung (62),
- eine zweite Ventileinrichtung (36) zum Sperren oder Freigeben der Steuerleitung (62),
- ein Relaisventil (38), das von der Steuerleitung (62) ansteuerbar ist und zumindest einen Federspeicherbremszylinder (20) der elektrischen Feststellbremse (14) be- oder entlüftet, und
- zumindest einen mit dem Steuergerät (32) gekoppelten Drucksensor (60) umfasst,
- wobei das Steuergerät (32) ausgelegt ist, eine Fehlermeldung auszugeben, wenn nach der Betätigung der ersten Ventileinrichtung (34) der von dem Drucksensor (60) gemessene Druck sich maximal um einen vorgegebenen Differenzbetrag ändert,
**dadurch gekennzeichnet, dass** der zumindest eine Drucksensor (60) zwischen der zweiten Ventileinrichtung (36) und dem Relaisventil (38) angeordnet ist oder dass der zumindest eine Drucksensor (60) zwischen der ersten Ventileinrichtung (34) und der zweiten Ventileinrichtung (36) angeordnet ist.

2. Elektrische Feststellbremse (14) nach Anspruch 1, **dadurch gekennzeichnet, dass** das Steuergerät (32) geeignet ist, eine Fehlermeldung auszugeben, wenn nach der Betätigung der ersten Ventileinrichtung (34) die ermittelte Druckdifferenz gleich Null ist.

3. Elektrische Feststellbremse (14) nach Anspruch 1 oder 2, **dadurch gekennzeichnet, dass** das Steuergerät (32) geeignet ist, eine Fehlermeldung auszugeben, wenn sich der von dem Drucksensor (60) gemessene Druck um mehr als einen vorgegebenen Differenzbetrag ändert, ohne dass die elektrische Feststellbremse (14) betätigt wird.

4. Fahrzeug (16) mit einer elektrischen Feststellbremse (14) nach einem der vorhergehenden Ansprüche.

5. Verfahren zum Testen der Funktionsfähigkeit einer ersten als Stellglied wirkenden Ventileinrichtung (34) zum Be- und Entlüften einer Steuerleitung (62) einer elektrischen Feststellbremse (14) mit
- einem Steuergerät (32),
- einer zweiten Ventileinrichtung (36) zum Sperren oder Freigeben der Steuerleitung (62),
- einem Relaisventil (38), das von der Steuerleitung (62) ansteuerbar ist und zumindest einen Federspeicherbremszylinder (20) der elektrischen Feststellbremse (14) be- oder entlüftet, und
- zumindest einem mit dem Steuergerät (32) gekoppelten Drucksensor (60),
wobei das Steuergerät (32) eine Fehlermeldung ausgibt, wenn nach der Betätigung der ersten Ventileinrichtung (34) der von dem Drucksensor (60) gemessene Druck sich maximal um einen vorgegebenen Differenzbetrag ändert,
**dadurch gekennzeichnet, dass** der zumindest eine Drucksensor (60) den Druck zwischen der zweiten Ventileinrichtung (36) und dem Relaisventil (38) erfasst, oder dass der zumindest eine Drucksensor (60) den Druck zwischen der ersten Ventileinrichtung (34) und der zweiten Ventileinrichtung (36) erfasst.

6. Verfahren nach Anspruch 5, **dadurch gekennzeichnet, dass** das Steuergerät eine Fehlermeldung ausgibt, wenn nach der Betätigung der ersten Ventileinrichtung (34) die ermittelte Druckdifferenz gleich Null ist.

7. Verfahren nach Anspruch 5 oder 6, **dadurch gekennzeichnet, dass** das Steuergerät (32) eine Fehlermeldung ausgibt, wenn sich der von dem Drucksensor (60) gemessene Druck um mehr als einen vorgegebenen Differenzbetrag ändert, ohne dass die elektrische Feststellbremse (14) betätigt wird.

8. Verfahren nach einem der Ansprüche 5 bis 7, **dadurch gekennzeichnet, dass** das Steuergerät (32) nach der Einleitung des Druckaufbaus vor Erreichen des normalen Betriebsdrucks in einer Versorgungsleitung (44) der elektrischen Feststellbremse (14) die erste Ventileinrichtung (34) während eines Zeitintervalls t₁ ansteuert, um deren Funktion zu überprüfen.

9. Verfahren nach einem der Ansprüche 5 bis 8, **dadurch gekennzeichnet, dass** das Steuergerät (32) bei Vorliegen des normalen Betriebsdrucks in einer Versorgungsleitung (44) der elektrischen Feststellbremse (14) die erste Ventileinrichtung (34) während einer Zeitspanne t₂ ansteuert, um deren Funktion zu überprüfen.

10. Verfahren nach einem der Ansprüche 5 bis 9, **dadurch gekennzeichnet,**
- **dass** die Raddrehzahl zur Bestimmung eines Bewegungszustands des Fahrzeugs gemessen wird und
- **dass** der Bewegungszustand im Rahmen eines Plausibilitätstests für die Funktionsfähigkeit des Drucksensors (60) herangezogen wird.

## Claims

1. Electric parking brake (14) of a vehicle (16), with a control unit (32), wherein the electric parking brake (14) comprises
- a first valve device (34) that acts as a control element for aerating and venting a control line (62),
- a second valve device (36) for shutting off or opening the control line (62),
- a relay valve (38), which can be controlled by the control line (62) and which aerates or vents at least one spring brake cylinder (20) of the electric parking brake (14), and
- at least one pressure sensor (60) coupled to the control unit (32),
- wherein the control unit (32) is configured to emit an error message if, after the actuation of the first valve device (34), the pressure measured by the pressure sensor (60) changes at most by a specified amount,
**characterised in that** the at least one pressure sensor (60) is arranged between the second valve device (36) and the relay valve (38) without the at least one pressure sensor (60) being arranged between the first valve device (34) and the second valve device (36).

2. Electric parking brake (14) according to claim 1, **characterised in that** the control unit (32) is able to emit an error message if, after the actuation of the first valve device (34), the measured pressure difference is zero.

3. Electric parking brake (14) according to claims 1 or 2, **characterised in that** the control unit (32) is able to emit an error message if the pressure measured by the pressure sensor (60) changes by more than a specified amount without the electric parking brake (14) being actuated.

4. Vehicle (16) having an electric parking brake (14) according to one of the preceding claims.

5. Method for testing the functionality of a first valve device (34) that acts as a control element for aerating and venting a control line (62) of an electric parking brake (14), with
- a control unit (32),
- a second valve device (36) for shutting off or opening the control line (62),
- a relay valve (38) which can be controlled by the control line (62) and which aerates or vents at least one spring brake cylinder (20) of the electric parking brake (14), and
- at least one pressure sensor (60) coupled to the control unit (32),
wherein the control unit (32) emits an error message if, after the actuation of the first valve device (34), the pressure measured by the pressure sensor (60) changes at most by a specified amount,
**characterised in that** the at least one pressure sensor (60) measures the pressure between the second valve device (36) and the relay valve (38) without the at least one pressure sensor (60) measuring the pressure between the first valve device (34) and the second valve device (36).

6. Method according to claim 5, **characterised in that** the control unit (32) emits an error message if, after the actuation of the first valve device (34), the pressure difference measured is zero.

7. Method according to claims 5 or 6, **characterised in that** the control unit (32) emits an error message if the pressure measured by the at least one pressure sensor (60) changes by more than a specified amount without the electric parking brake (14) being actuated.

8. Method according to one of claims 5 to 7, **characterised in that**, after the initiation of the pressure build-up before the normal operating pressure is reached in a supply line (44) of the electric parking brake (14), the control unit (32) actuates the first valve device (34) for a time period t₁ in order to check its functioning.

9. Method according to one of claims 5 to 8, **characterised in that**, in the presence of the normal operating pressure in a supply line (44) of the electric parking brake (14), the control unit (32) actuates the first valve device (34) for a time period t₂ in order to check its functioning.

10. Method according to one of claims 5 to 9, **characterised in that**
- the wheel rotational speed is measured in order to determine a movement condition of the vehicle, and
- the movement condition is used within the scope of a feasibility test for the functionality of the pressure sensor (60).

## Revendications

1. Frein (14) électrique de stationnement d'un véhicule (16) comprenant un appareil (32) de commande, le frein (14) électrique de stationnement comprenant
- un premier dispositif (34) de soupape, agissant comme organe de réglage pour alimenter en air une ligne (62) de commande et pour la purger,
- un deuxième dispositif (36) de soupape, pour bloquer ou dégager la ligne (62) de commande,
- une vanne (38) relais, qui peut être commandée par la ligne (62) de commande et qui peut alimenter en air ou purger au moins un cylindre (20) de frein à ressort accumulateur du frein (14) électrique de stationnement et
- au moins un capteur (60) de pression, adjoint à l'appareil (32) de commande,
- dans lequel l'appareil (32) de commande est conçu pour émettre un message de défaut, si, après l'actionnement du premier dispositif (34) de soupape, la pression mesurée par le capteur (60) de pression varie au maximum d'une différence donnée à l'avance,
**caractérisé en ce que** le au moins un capteur (60) de pression est monté entre le deuxième dispositif (36) de soupape et la vanne (38) relais, ou **en ce que** le au moins un capteur (60) de pression est monté entre le premier dispositif (34) de soupape et le deuxième dispositif (36) de soupape.

2. Frein (14) électrique de stationnement suivant la revendication 1, **caractérisé en ce que** l'appareil (32) de commande est propre à émettre un message de défaut, si, après l'actionnement du premier dispositif (34) de soupape, la différence de pression, qui a été déterminée, est égale à zéro.

3. Frein (14) électrique de stationnement suivant la revendication 1 ou 2, **caractérisé en ce que** l'appareil (32) de commande est propre à émettre un message de défaut, si la pression mesurée par le capteur (60) de pression varie de plus qu'une différence donnée à l'avance, sans que le frein (14) électrique, de stationnement soit actionné.

4. Véhicule (16), ayant un appareil (32) de commande suivant l'une des revendications précédentes.

5. Procédé pour tester l'aptitude à fonctionner d'un premier dispositif (34) de soupape agissant en organe de réglage pour alimenter en air une ligne (62) de commande d'un frein (14) électrique de stationnement et pour la purger, comprenant
- un appareil (32) de commande,
- un deuxième dispositif (36) de soupape pour bloquer ou dégager la ligne (62) de commande,
- une vanne (38) relais, qui peut être commandée par la ligne (62) de commande et qui alimente en air ou purge au moins un cylindre (20) de frein à ressort accumulateur du frein (14) électrique de stationnement et
- au moins un capteur (60) de pression adjoint à l'appareil (32) de commande, dans lequel l'appareil (32) de commande émet un message de défaut, si, après l'actionnement du premier dispositif (34) de soupape, la pression mesurée par le capteur (60) de pression varie au maximum d'une différence donnée à l'avance,
**caractérisé en ce que** le au moins un capteur (60) de pression détecte la pression entre le deuxième dispositif (36) de soupape et la vanne (38) relais, ou le au moins un capteur (60) de pression détecte la pression entre le premier dispositif (34) et deuxième dispositif (36) de soupape.

6. Procédé suivant la revendication 5, **caractérisé en ce que** l'appareil de commande émet un message de défaut, si, après l'actionnement du premier dispositif (34) de soupape, la différence de pression, qui a été déterminée, est égale à zéro.

7. Procédé suivant la revendication 5 ou 6, **caractérisé en ce que** l'appareil (32) de commande émet un message de défaut, si la pression mesurée par le capteur (60) de pression se modifie de plus d'une différence donnée à l'avance, sans que le frein (14) électrique de stationnement soit actionné.

8. Procédé suivant l'une des revendications 5 à 7, **caractérisé en ce que** l'appareil (32) de commande, après le début de l'établissement de la pression, mais avant d'atteindre la pression de fonctionnement normale dans une ligne (44) d'alimentation du frein (14) électrique de stationnement, commande le premier dispositif (34) de soupape, pendant un intervalle t₁ de temps, pour en contrôler le fonctionnement.

9. Procédé suivant l'une des revendications 5 à 8, **caractérisé en ce que** l'appareil (32) de commande, en présence de la pression de fonctionnement normale dans une ligne (44) d'alimentation du frein (14) électrique de stationnement, commande le premier dispositif (34) de soupape pendant un laps de temps t₂, pour en contrôler le fonctionnement.

10. Procédé suivant l'une des revendications 5 à 9, **caractérisé**
- **en ce que** l'on mesure la vitesse de rotation d'une roue pour déterminer un état de déplacement du véhicule et
- **en ce que** l'on tire parti de l'état de déplacement dans le cadre d'un test de vraisemblance pour l'aptitude à fonctionner du capteur (60) de pression.
